# EUROPEAN PATENT APPLICATION

(11) **EP 1 378 514 A1**
(43) Date of publication of application: **07.01.2004**
(21) Application number: 02077664.7
(22) Date of filing: 04.07.2002
(51) Int. Cl.: C07F 7/18

(54) **Process for the preparation of acyloxysilanes**

(71) Applicant: SigmaKalon Group B.V., 1422 AD Uithoorn (NL)
(72) Inventor: Plehiers, Mark, 1000 Bruxelles (BE)
(74) Representative: Walsh, David Patrick

(57) **Abstract**

Process for the preparation of acyloxysilane comprising the step of reacting, in the presence of a strong acid, a hexahydrocarbyldisiloxane with a carboxylic anhydride.

## Description

### Field of the invention

The invention relates to a new method for the preparation of acyloxysilanes.

### Background

Acyloxysilanes are valuable intermediates in organic synthesis. Indeed they are considered as highly reactive coupling and silylating agents.
Several processes are known for the synthesis of acyloxysilanes.

T.W. Greene and P.G.M. Wuts disclose in "Protective groups in organic synthesis" ( J. Wiley & Sons, Inc. , New York, 3rd. ed., 1999) the synthesis of acyloxysilane from carboxylic acid and silicon halide in the presence of a base.

The reaction of silyl hydrides with carboxylic acids in the presence of various metal catalysts to provide acyloxysilanes is dislosed in Zh. Obshch. Khim. 24, 861, 1954, Bull. Chem. Soc. Jap. 62(2), 211, 1989 and in Org. Letters 2(8), 1027, 2000. These methods have the disadvantage of releasing hydrogen as by product.

US 4,379,766 discloses the reaction of a carboxylic acid salt with a silicon halide in the presence of phase transfer catalysts to produce acyloxysilane. This reaction has the disadvantage to yield as by-product a halide salt, which has to be removed by filtration.

J. Valade describes in "C. R. Acad. Sci." n° 246, pp.952-953 (1958) the reaction at reflux of hexamethyldisiloxane or hexaethyldisiloxane with acetic anhydride or benzoic anhydride in the presence of zinc chloride whereas hexaphenyldisiloxane does not react with acetic anhydride or benzoic anhydride in the presence of zinc chloride.
The object of the present invention is to provide an advantageous process to produce acyloxysilanes.

Another object of the present invention is to provide an advantageous process allowing to produce alkyl substitued acyloxysilanes other than known trimethylacyloxysilanes and triethylacyloxysilanes.

Yet another object of the present invention is to produce acyloxysilanes without any by-product offering an improvement vis-a-vis the disadvantage disclosed above.

The present inventor has surprisingly found that by reacting hexahydrocarbyldisiloxane with saturated carboxylic anhydride in the presence of a strong acid catalyst, acyloxysilane could be synthesised.

The present invention provides a novel process capable of readily preparing acyloxysilanes in a high yield from easily available starting materials.

### Summary of the invention

The present invention relates to a new process for the preparation of acyloxysilanes of either general formula (I) 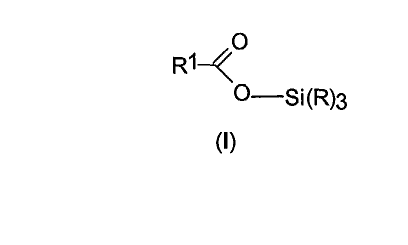 wherein
R¹ and each R independently represents a hydrocarbyl or a substituted hydrocarbyl group.
or general formula (**II**) 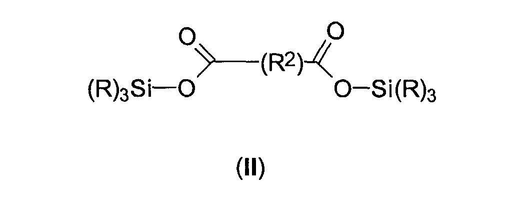 wherein R is as already defined above and R² represents a hydrocarbenyl radical
which process comprises the step of reacting, in the presence of a strong acid, a hexahydrocarbyldisiloxane of formula (**III**)

(R)₃Si―O―Si(R)₃ (III)

wherein
R is as already defined above
either with a carboxylic anhydride of formula (**IV**) 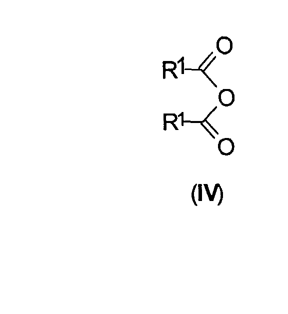 wherein
R¹ is as already defined above
or with a carboxylic anhydride of formula (**V**) 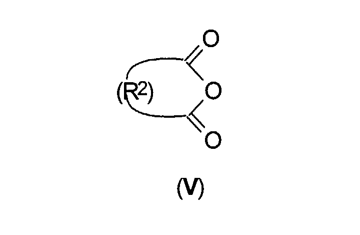 wherein
R² is as already defined above
with the provisio that there is excluded either a carboxylic anhydride of formula (**VI**), 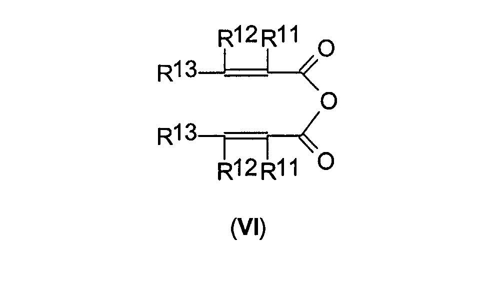 wherein
R¹¹, R¹² each independently represents a hydrogen atom or an alkyl group,
R¹³ represents a hydrogen atom, an alkyl group or -COOR⁶ wherein R⁶ represents an alkyl, an aryl or a substituted aryl group.
or a carboxylic anhydride of formula (**VII**) 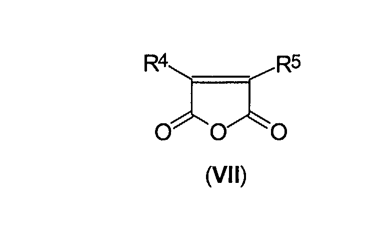 wherein R⁴, R⁵ each independently represents a hydrogen atom or an alkyl group.

The catalyst used in the present invention consists of a strong acid.

In a preferred embodiment R each independently represent a linear, branched or cyclic alkyl group, saturated or unsaturated, containing from 1 to 12 carbon atoms, preferably from 1 to 6 carbon atoms, more preferably from 1 to 4 carbon atoms, yet more preferably 4 carbon atoms. More preferably, R is chosen from the group of methyl, ethyl, n-propyl, isopropyl, n-butyl, i-butyl, sec-butyl, t-butyl. In a more preferred embodiment R is n-butyl or isopropyl.

### Detailed description of the invention

The present invention relates to a new process for the synthesis of acyloxysilanes according either to the general scheme : 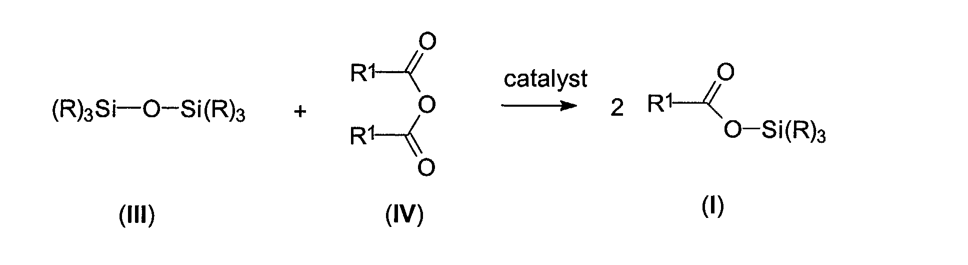 or to the general scheme:

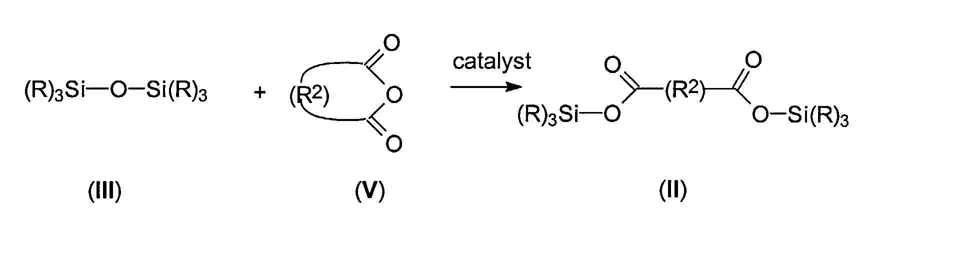

Carboxylic anhydride represented by the above formula (**IV**) or (**V**) is mixed with hexahydrocarbyldisiloxane of formula (**III**) optionally in the presence of an inert solvent.

The reaction may be conducted under atmospheric pressure and can take place at a temperature within the range of from 25°C to 140°C, preferably from 25°C to 100°C, more preferably from 25°C to 90°C. The conditions of reaction (temperature and time of reaction) may be chosen such as to get the desirable reaction yield.

The reaction progress may be monitored by any suitable analytical method.

Examples of carboxylic anhydrides, which can be used in the process according to the invention, include formic anhydride, acetic anhydride, propionic anhydride, butyric anhydride, succinic anhydride, glutaric anhydride, tetrahydrophtalic anhydride and 3-methyl glutaric anhydride.

Examples of solvent, which can be used in the process according to the invention, include hexane, toluene or xylene.

Examples of acyloxysilanes prepared by the process of the invention using acetic anhydride include trimethylsilyl acetate, triethylsilyl acetate, tri-n-propylsilyl acetate, triisopropylsilyl acetate, tri-n-butylsilyl acetate, triisobutylsilyl acetate, tri-s-butylsilyl acetate, tri-n-amylsilyl acetate, tri-n-hexylsilyl acetate, tri-n-octylsilyl acetate, tri-n-dodecylsilyl acetate, triphenylsilyl acetate, tri-p-methylphenylsilyl acetate, tribenzylsilyl acetate, tri t-butylsilyl acetate. Other examples include ethyldimethylsilyl acetate, n-butyldimethylsilyl acetate, t-butyl dimethylsilyl acetate diisopropyl-n-butylsilyl acetate, n-octyldi-n-butylsilyl acetate, diisopropylstearylsilyl acetate, dicyclohexylphenylsilyl acetate, t-butyldiphenylsilyl acetate, phenyldimethylsilyl acetate and lauryldiphenylsilyl acetate.

Examples of acyloxysilanes prepared by the process of the invention using succinic anhydride include hexamethylsilyl succinate, hexaethylsilyl succinate, hexa-n-propylsilyl succinate, hexaisopropylsilyl succinate, hexa-n-butylsilyl succinate, hexaisobutylsilyl succinate, hexa-s-butylsilyl succinate, hexa-n-amylsilyl succinate, hexa-n-hexylsilyl succinate, hexa-n-octylsilyl succinate, hexa-n-dodecylsilyl succinate, hexaphenylsilyl succinate, hexa-p-methylphenylsilyl succinate, hexabenzylsilyl succinate, hexa t-butylsilyl succinate. Other examples include bis(ethyldimethylsilyl) succinate, bis(n-butyldimethylsilyl) succinate, bis(t-butyl dimethylsilyl) succinate, bis( diisopropyl-n-butylsilyl) succinate, bis(n-octyldi-n-butylsilyl) succinate, bis(diisopropylstearylsilyl) succinate, bis(dicyclohexylphenylsilyl) succinate, bis(t-butyldiphenylsilyl) succinate, bis(phenyldimethylsilyl) succinate and bis(lauryldiphenylsilyl) succinate.

Examples of acyloxysilanes prepared by the process of the invention using glutaric anhydride include hexamethylsilyl glutarate, hexaethylsilyl glutarate, hexa-n-propylsilylglutarate, hexaisopropylsilylglutarate, hexa-n-butylsilyl glutarate, hexaisobutylsilyl glutarate, hexa-s-butylsilyl glutarate, hexa-n-amylsilyl glutarate, hexa-n-hexylsilyl glutarate, hexa-n-octylsilyl glutarate, hexa-n-dodecylsilyl glutarate, hexaphenylsilyl glutarate, hexa-p-methylphenylsilyl glutarate, hexabenzylsilyl glutarate, hexa t-butylsilyl glutarate. Other examples include bis(ethyldimethylsilyl) glutarate, bis(n-butyldimethylsilyl) glutarate, bis(t-butyl dimethylsilyl) glutarate, bis( diisopropyl-n-butylsilyl) glutarate, bis(n-octyldi-n-butylsilyl) glutarate, bis(diisopropylstearylsilyl) glutarate, bis(dicyclohexylphenylsilyl) glutarate, bis(t-butyldiphenylsilyl) glutarate, bis(phenyldimethylsilyl) glutarate and bis(lauryldiphenylsilyl) glutarate.

The reaction is conducted in the presence of a catalyst, preferably a catalyst consisting of a strong acid. Among strong acids that can be used, one can cite sulfuric acid, phosphoric acid, chlorhydric acid, bromhydric acid, iodhydric acid, trifluoromethanesulfonic acid or perfluoroalkylsulfonic acids, methanesulfonic acid, para-toluene sulfonic acid, trifluoroacetic acid. Strong ion exchange resins (sulfonated styrene copolymers) such as Amberlyst® 15 resin (CAS RN = 39389-20-3) or perfluoroalkylsulfonic resins such as Nafion® NR50 resin (CAS RN = 118473-68-0) may also be used.

The advantage of this invention is that the process uses reactants that can be easily handled. Indeed, hexahydrocarbyldisiloxanes may be considered as easily accessible since they are formed as by-product during acidic deprotection of silyl protected reactive functional groups such as e.g. alcohols, amines or carboxylic acids (as described in "Protective Groups in Organic Synthesis" T.W.Greene and P.G.M.Wuts, J.Wiley & Sons, 1999).

Another advantage lies in the simplicity of the procedure (no by-products). Indeed even if the reaction is not completed (yield of reaction less than 100%), there are no by-products formed. Only hexahydrocarbyldisiloxane and carboxylic anhydride that have not reacted remain. Those can be distilled in order to get pure acyloxisilane.

### Examples and comparative examples

All the reactants used in the examples and comparative examples were purchased from Aldrich and used without any preliminary purification.
NMR datas have been determined in CDCI3 and are expressed as delta versus TMS.

Examples 1 to 4 have been conducted according to the invention.
Comparative examples 1 to 3 have been conducted according to J.Valade in C. R. Acad. Sci. n° 246, pp. 952-953 (1958).

### Example 1

44.08 g of hexamethyldisiloxane, 28.4 g of acetic anhydride and 2.3 g of trifluoromethanesulfonic acid were stirred at room temperature for 48 hours to furnish trimethylsilyl acetate. The yield of the reaction was 78%.
Trimethysilyl acetate: ¹³C NMR: 172.0, 22.9, 0.1; ²⁹Si NMR: 23.1; IR (film): 2962, 1724, 1372, 1256, 1054, 1020, 938, 852 cm⁻¹.

### Example 2

44.08 g of hexamethyldisiloxane, 28.4 g of acetic anhydride and 52.3 g of dry Amberlyst A15 (ion exchange resin) were stirred at 50°C for 6 h to furnish trimethylsilyl acetate. The yield of the reaction was 91 %.
Trimethysilyl acetate: ¹³C NMR: 172.0, 22.9, 0.1; ²⁹Si NMR: 23.1; IR (film): 2962, 1724, 1372, 1256, 1054, 1020, 938, 852 cm⁻¹.

### Example 3

8.76 g of hexabutyldisiloxane, 2.16 g of acetic anhydride and 0.16 g of trifluoromethane sulfonic acid were stirred at room temperature for 48 h to furnish tributylsilyl acetate. The yield of the reaction was 67%.
Tributysilyl acetate: ¹³C NMR: 172.2, 26.7, 25.4, 22.9, 14.1, 13.5; ²⁹Si NMR: 22.6; IR (film): 2959, 2927, 1726, 1371, 1257, 1083, 1019, 934, 887 cm⁻¹.

### Example 4

11.8 g of hexamethyldisiloxane, 5 g of glutaric anhydride and 0.98 g of trifluoromethane sulfonic acid were stirred in toluene at 90°C for 24 h to furnish hexamethyldisilyl glutarate. The yield of the reaction was 75%.
Hexamethyldisilyl glutarate: ¹³C NMR: 173.7, 34.8, 20.3, -0.1; ²⁹Si NMR: 23.23; IR (film): 2964, 1717, 1377, 1256, 1210, 1028, 852 cm⁻¹.

### Comparative Example 1

5g of hexamethyldisiloxane, 3.1 g of acetic anhydride and 0.8 g of dry zinc chloride were stirred at 110°C for 2 h to furnish trimethylsilyl acetate. The yield of the reaction was 67%.
Trimethysilyl acetate: ¹³C NMR: 172.0, 22.9, 0.1; ²⁹Si NMR: 23.1; IR (film): 2962, 1724, 1372, 1256, 1054, 1020, 938, 852 cm⁻¹.

### Comparative Example 2

5g of hexamethyldisiloxane, 3.1 g of acetic anhydride and 0.8 g of dry zinc chloride were stirred at room temperature for 24 hours to furnish trimethylsilyl acetate. After 24 hours, no transformation was observed.

### Comparative Example 3

5g of hexabutyldisiloxane, 2.16 g of acetic anhydride and 0.32 g of dry zinc chloride were stirred at 110°C. After 24 hours, no transformation was observed.

### Comparative Example 4

5g of hexa-isopropyldisiloxane, 1.56 g of acetic anhydride and 0.32 g of dry zinc chloride were stirred at 110°C. After 24 hours, no transformation was observed.

## Claims

1. Process for the preparation of acyloxysilanes of either general formula (**I**) 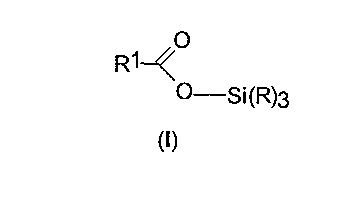 wherein
R¹ and each R independently represents a hydrocarbyl or a substituted hydrocarbyl group.
or general formula (II) 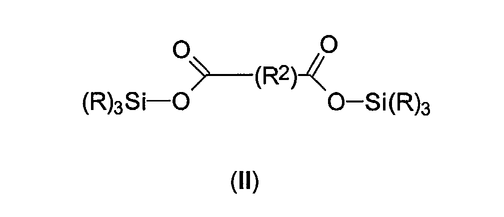 wherein R is as already defined above and R² represents a hydrocarbenyl radical
which process comprises the step of reacting, in the presence of a strong acid, a hexahydrocarbyldisiloxane of formula (**III**)
(R)₃Si―O―Si(R)₃ (III)
wherein
R is as already defined above either with a carboxylic anhydride of formula (**IV**) 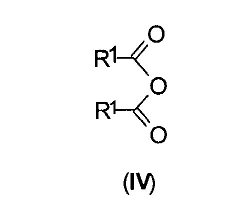 wherein R¹ is as already defined above or with a carboxylic anhydride of formula (**V**) 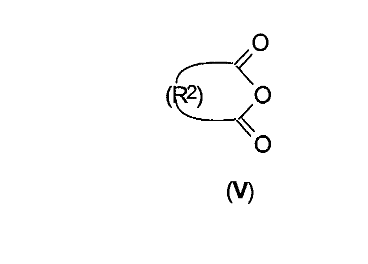 wherein R² is as already defined above with the provisio that there is excluded either a carboxylic anhydride of formula (**VI**), 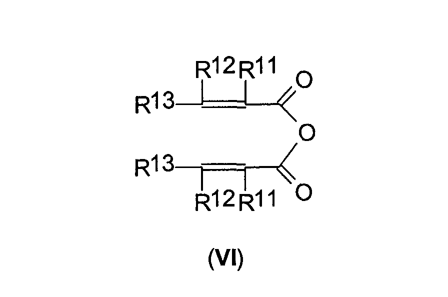 wherein R¹¹, R¹² each independently represents a hydrogen atom or an alkyl group,
R¹³ represents a hydrogen atom, an alkyl group or -COOR⁶ wherein R⁶ represents an alkyl, an aryl or a substituted aryl group.
or a carboxylic anhydride of formula (**VII**) 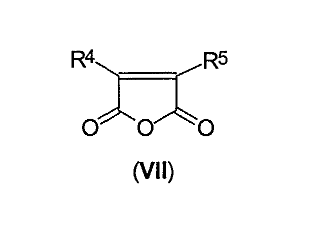 wherein R⁴, R⁵ each independently represents a hydrogen atom or an alkyl group.

2. A process according to claim 1, wherein R each independently represent a linear, branched or cyclic alkyl group, saturated or unsaturated, containing from 1 to 12 carbon atoms, preferably from 1 to 6 carbon atoms, more preferably from 1 to 4 carbon atoms, yet more preferably 4 carbon atoms.

3. A process according to claim 2 wherein R each independently are chosen from the group of methyl, ethyl, n-propyl, isopropyl, n-butyl, i-butyl, sec-butyl, t-butyl.

4. A process according to claim 3 wherein R are n-butyl or isopropyl.

5. A process according to claims 1 to 5, wherein the carboxylic anhydrides are selected from the group of formic anhydride, acetic anhydride, propionic anhydride, butyric anhydride, succinic anhydride, tetrahydrophtalic anhydride, glutaric anhydride, 3-methyl glutaric anhydride.
